# EUROPÄISCHE PATENTSCHRIFT

(11) **EP 0 607 479 B1**
(45) Veröffentlichungstag und Bekanntmachung des Hinweises auf die Patenterteilung: **20.12.1995**
(21) Anmeldenummer: 93100711.6
(22) Anmeldetag: 19.01.1993
(51) Int. Cl.: F16K 11/07, F16K 31/524

(54) **Schaltventil zum Anschluss an eine Badewannen-Mischarmatur, mit einem Zulaufanschluss und zwei wahlweise aktivierbaren Auslaufanschlüssen**
Change-over valve for attachment to a bath tub mixing valve with one supply and two alternatively activatable discharge connections
Soupape d'inversion pour l'attache à un robinet mitigeur de baignoire avec une conduite d'arrivée et deux conduites de décharge activables alternativement

(43) Veröffentlichungstag der Anmeldung: 27.07.1994
(73) Patentinhaber: Schmidt & Lenhardt GmbH & Co. oHG, 88316 Isny (DE)
(72) Erfinder: Schmidt, Peter, W-7978 Eisenharz (DE)
(74) Vertreter: Hübner, Hans-Joachim, Dipl.-Ing.

(56) Entgegenhaltungen:
- EP-A- 0 465 301
- DE-A- 2 408 208
- DE-B- 1 005 460
- DE-B- 1 187 087

## Beschreibung

Die Erfindung betrifft ein Schaltventil zum Anschluß an eine Badewannen-Mischarmatur mit einem Zulaufanschluß und zwei wahlweise aktivierbaren Auslaufanschlüssen, bestehend aus einem, in einem Gehäuse verstellbar angeordneten Ventilkörper sowie einem Betätigungsorgan zum Verstellen des Ventilkörpers (DE-B-1 005 460).

Solche Umschaltventile sind z.B. bekannt, um vom Badewanneneinlauf auf eine Handbrause umzuschalten. Sie sind dann in der Regel in die Badewannen-Mischarmatur integriert und weisen einen drehbaren Ventilkörper auf. Die Betätigung erfolgt über einen Schwenkhebel zum Drehen des Ventilkörpers. Für den Anschluß von druckwasserbetätigbaren Liftgeräten, die von Behinderten benötigt werden, um sich in sitzender Stellung in die Badewanne absenken und auch wieder aus dieser in eine Hochstellung anheben zu können, werden separate Umschaltventile oder Weichen verwendet, die an den Anschluß der Handbrause angeschraubt werden. Der Schlauch der Handbrause ist an dieses Umschaltventil fest angeschlossen, während das Liftgerät in der Regel mit einer Schnellkupplung angeschlossen ist. Es gibt nun eine Vielzahl unterschiedlicher Mischbatterie-Typen und der Duschschlauch-Anschluß kann unten, oben, hinten oder seitlich liegen. An entsprechender Stelle ist dann das Schaltventil zu montieren. Der Betätigungshebel für das Schaltventil liegt dann häufig sehr ungünstig, sodaß er von einem Behinderten, der seine Bewegungen nur unvollkommen kontrollieren kann, nur schwer zu betätigen ist. Auch wenn sich die Badewannen-Einlaufarmatur am Fußende einer Badewanne befindet, tritt das Problem auf, daß der Behinderte das Schaltventil nicht oder nur sehr umständlich erreichen kann, sodaß eine Umstellung auf Handbrause nur schwerlich möglich ist.

Aufgabe der Erfindung ist es, das Schaltventil der eingangs genannten Art so auszubilden, daß es unabhängig von der Position der Badewannen-Einlaufarmatur bezüglich der Badewanne und von der Anordnung des Anschlusses der Handbrause an der Armatur jederzeit leicht von einem auf einem Liftgerät sitzenden Behinderten mit einer einfachen Bewegung beispielsweise mittels des Handrückens betätigt werden kann.

Diese Aufgabe wird erfindungsgemäß dadurch gelöst, daß der Ventilkörper in einer länglichen, zylindrischen Kammer längs-verschiebbar gelagert ist und die drei Anschlüsse rechtwinklig zur Kammerlängsachse in Längsabständen in die Kammer münden, wobei der mittlere Anschluß der Zulaufanschluß ist, daß der Ventilkörper in seiner Mittelstellung mindestens einseitig aus der Kammer stirnseitig herausragt, daß das Betätigungsorgan aus einer, teilweise aus einer Gehäuseöffnung herausragenden Wippe besteht, die in ihrer Längsmitte im Gehäuse schwenkbar gelagert ist und wenigstens an einem Ende einen Betätigungsfortsatz aufweist, der das eine Ende des Ventilkörpers an einer Betätigungsfläche kontaktiert, wobei die Betätigungsfläche so gestaltet ist, daß beim Niederdrücken des dem Betätigungsfortsatz benachbarten Endes der Wippe aus einer Neutralstellung in eine Schaltstellung der Ventilkörper axial verschoben wird und den Zulaufanschluß mit einem der beiden Auslaufanschlüsse kommunizierend verbindet und daß eine Rückstellvorrichtung vorgesehen ist, die beim Zurückschwenken der Wippe den Ventilkörper in die Neutralstellung zurückschiebt.

Die Erfindung bringt wesentliche Vorteile. Einmal kann das neue Schaltventil unabhängig von der Mischarmatur an geeigneter Stelle, z.B. in Wannenmitte an der Zimmerwand befestigt werden, wobei der Zulaufanschluß über einen flexiblen Schlauch von der Mischbatterie her erfolgt. Das Schaltventil ist also vom Behinderten auch dann erreichbar, wenn sich dieser mit dem Lifter in die Badewanne abgesenkt hat. Die breitflächige Wippe erlaubt es dem Behinderten mittels eines einzigen Druckes auf ein Ende der Wippe das Ventil umzuschalten, was ihm beispielsweise mit dem Handrücken oder auch mit dem Ellenbogen gelingt. Schließlich ist auch die Betätigung des Ventilkörpers von Vorteil, weil die Wippe stirnseitig mit dem Ventilkörper zusammenwirkt, sodaß Abdichtungsprobleme vermieden werden. Solche Probleme könnten nämlich auftreten, wenn die Wippe mit einem zentralen Steg in eine Ausnehmung des Ventilkörpers eingreift, die in Ventilkörpermitte angeordnet ist. Mit einer solchen Konstruktion lassen sich zwar ebenfalls die meisten Vorteile der Erfindung erzielen, jedoch macht eben die Kupplung des zentralen Betätigungsarmes der Wippe in einer am Umfang des Ventilkörpers vorgesehenen Querausnehmung eine zusätzliche Abdichtung des Ventilkörpers im Gehäuse notwendig, was in der Regel zwei zusätzliche Abdichtringe beidseitig der Ventilkörperausnehmung erforderlich macht.

Die Rückstellvorrichtung läßt sich gemäß einer Alternative mittels einer Feder realisieren. Sobald also der Bediener den anderen Arm der Wippe betätigt, gibt der Betätigungsfortsatz den Ventilkörper frei, sodaß dieser durch Federkraft in die Neutralstellung zurückgeschoben wird und wenn die Wippe ganz niedergedrückt wird - vorzugsweise unter Überwindung einer Raststellung - in die andere Schaltstellung gelangt.

Eine besonders einfache und störungssichere Alternative besteht erfindungsgemäß darin, daß die Rückstellvorrichtung aus einem zweiten Betätigungsfortsatz besteht, der - bezogen auf die mittlere Symmetrieebene des Gehäuses - spiegelbildlich zum ersten Betätigungsfortsatz ausgebildet ist und am anderen Längsende der Wippe angeordnet ist und mit dem anderen Ende des Ventilkörpers zusammenwirkt. Bei dieser Ausgestaltung bilden also beide Betätigungsfortsätze der Wippe eine Gabel, die den Ventilkörper stirnseitig einschließt.

Weitere Merkmale und Vorteile der Erfindung bilden die Gegenstände der übrigen Unteransprüche. Das Schaltventil besteht aus wenigen kostengünstigen Einzelteilen, wobei das Gehäuse und die Wippe als Kunststoff-Spritzgußteile ausgebildet sind und die drei Anschlüsse als Gewindestutzen einstückig mit dem Gehäuse geformt sind, während die zylindrische Kammer vorzugsweise in einer Metallbuchse ausgebildet ist, die im Gehäuse fest verankert ist. Statt der Metallbuchse läßt sich selbstverständlich auch eine Kunststoffbuchse verwenden. Die Buchse könnte ggf. auch noch entfallen, sodaß die zylindrische Kammer für den Ventilkörper im Gehäuse selbst ausgebildet ist.

Der Ventilkörper ist ein zylindrisches Bauteil, dessen Enden vorzugsweise gerundet sind. Er weist mindestens zwei Abschnitte geringeren Durchmessers auf, um den Zulauf mit jeweils einem der beiden Ausläufe zu verbinden, wobei an den Nachbarbereichen der im Durchmesser verringerten Abschnitte O-Ringe eingesetzt sind.

Anhand der Zeichnung, die ein Ausführungsbeispiel darstellt, wird die Erfindung näher beschrieben.

Es zeigt:
- FIG. 1: eine Längsschnittansicht durch das neue Schaltventil in seiner Neutralstellung,
- FIG. 2: eine Schnittansicht ähnlich FIG. 1, jedoch in einer der beiden Schaltstellungen des Schaltventils, und

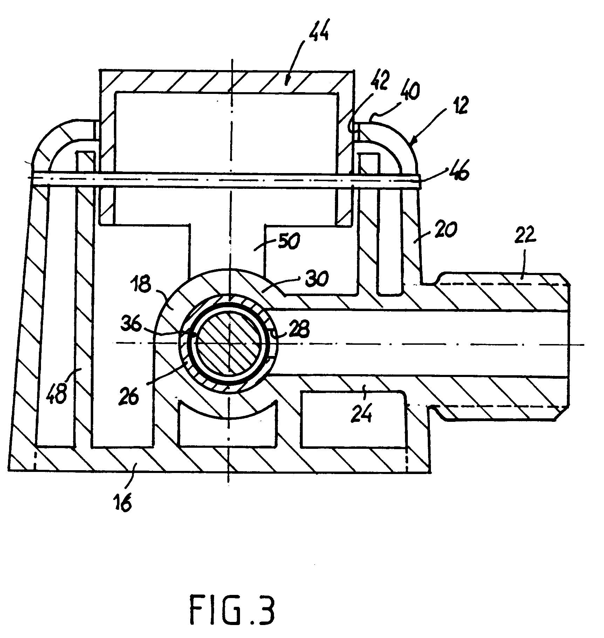

- FIG. 3: eine Querschnittansicht durch das Schaltventil gemäß FIG. 1.

Ein Schaltventil 10 besteht aus einem etwa prismatischem, jedoch an den Kanten gerundeten Gehäuse 12 mit einer ebenen Bodenfläche 14, die rechteckförmig konturiert ist und ein Längen-Breiten-Verhältnis von etwa 2:1 aufweist. Mit dem Gehäuseboden 16 ist einstückig eine Lagerhülse 18 ausgebildet, deren Längsachse die Längsmittelebene des Gehäuses 12 durchsetzt. An einer Seitenwand 20 des Gehäuses 12 befindet sich eine Reihe von drei Gewindestutzen 22, die mittels koaxialer Verbindungsstücke 24 mit der Lagerhülse einstückig verbunden sind. Der mittlere Anschluß 22 liegt in der mittleren Querebene des Gehäuses 12 und die beiden anderen Anschlüsse haben von diesem mittleren Anschluß denselben Längsabstand.

Die Verbindungsabschnitte 24 münden rechtwinklig in die Lagerhülse 18 und die Ebene der Achsen der drei Anschlüsse 22 schneidet die Achse der Lagerhülse 18.

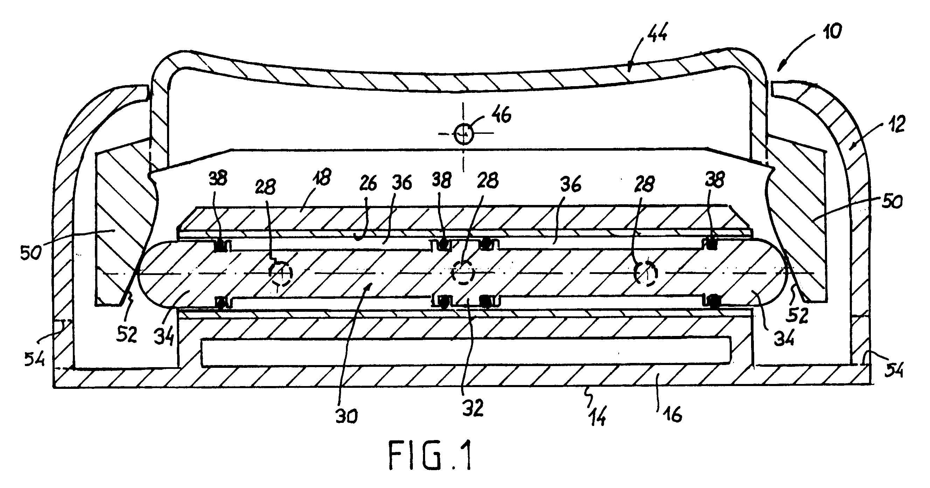

In der Lagerhülse 18 ist eine Buchse 26 gleicher Länge eingesetzt, welche drei Bohrungen 28 aufweist, die längs einer Mantellinie der Buchse 26 angeordnet sind und denselben gegenseitigen Abstand wie die Anschlüsse 22 aufweisen. Jedem Anschluß 22 ist somit eine Bohrung 28 der Buchse 26 koaxial zugeordnet. In der Buchse 26 ist ein Ventilkörper 30 längsverschiebbar gelagert. Der Ventilkörper 30 ist länger als die Buchse 26 und steht in seiner Neutralstellung beidseitig über die Buchse 26 stirnseitig vor (FIG. 1). Der Ventilkörper 30 hat einen mittleren Bund 32 und zwei Endbunde 34, sodaß zwei längliche Ringkammern 36 jeweils zwischen einem Endbund 34 und dem Mittelbund 32 gebildet werden. In jedem dieser Bunde 32, 34 sind O-Ringe 38 angeordnet. Der mittlere Bund 32 hat zwei im Abstand liegende O-Ringe 38, sodaß in der in FIG. 1 gezeigten Neutralstellung die mittlere Bohrung 28 der Buchse 26 beidseitig abgedichtet ist. Die beiden Ringkammern 36 haben eine Länge mindestens gleich dem Außenrandabstand zweier benachbarter Bohrungen 28.

In der Deckwand 40 des Gehäuses 12 befindet sich eine etwa rechteckig konturierte Ausnehmung 42, in der ein Wippe 44 um eine Querachse 46 schwenkbar gelagert ist. Die Schwenkachse 46 liegt in der Quermittelebene des Gehäuses 12, also genau oberhalb der mittleren Bohrung 28 der Buchse 26. Die Achse 46 ist in den beiden Seitenwänden des Gehäuses 12 gehaltert und durchsetzt im Ausführungsbeispiel noch zwei Zwischenwände 48, die die Wippe 44 an den Längsseiten führen. In der Neutralstellung (FIG. 1) ragt die Wippe mit ihrem Oberteil aus dem Gehäuse 12 heraus. An den beiden Längsenden hat die Wippe 44 jeweils einen Betätigungsfortsatz 50 , der in der Neutralstellung der Wippe 44 das jeweilige stirnseitige Ende des Ventilkörpers 30 kontaktiert und über die Längsachse des Ventilkörpers 30 nach unten hinausragt. Jeder Betätigungsfortsatz 50 hat eine Betätigungsfläche 52, die im Ausführungsbeispiel im Längsschnitt gewölbt ist, ggf. aber auch unter einem entsprechenden Winkel eben ausgebildet sein kann. Die Wölbungsform der Flächen 52 ist so bestimmt, daß die Betätigungsflächen 52 in allen Schwenkstellungen der Wippe 44 beide gerundeten Enden des Ventilkörpers 30 kontaktieren.

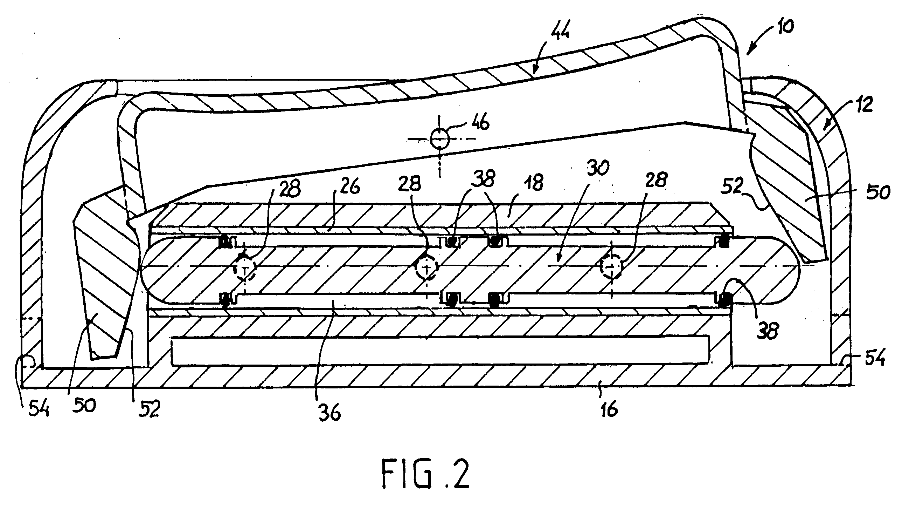

Wird also die Wippe 44 aus der Neutralstellung gemäß FIG. 1 in die eine Schaltstellung gemäß FIG. 2 verschwenkt, so drückt der linke Betätigungsfortsatz 50 den Ventilkörper 30 soweit nach rechts, bis der linke Ringkanal 36 die mittlere Bohrung 28 mit der linken Bohrung 28 der Buchse 26 verbindet. Die rechtsseitige Bohrung 28 bleibt dann gegenüber der mittleren Bohrung 28 abgesperrt. Betätigt man das in FIG. 2 rechtsseitige Ende der Wippe 44, so schiebt der rechtsseitige Betätigungsfortsatz 50 den Ventilkörper 30 nach links bis in die Neutralstellung und beim weiteren Niederdrücken über diese Neutralstellung hinaus, sodaß die rechte Bohrung 28 mit der mittleren Bohrung 28 der Buchse 26 kommuniziert.

Die Wippe 44 mit ihren beiden Betätigungsfortsätzen 50 bildet also eine Gabel mit einer lichten Länge gleich der Länge des Ventilkörpers 30.

Zur Befestigung des Gehäuses 12 an einer Gebäudewand dienen zwei Öffnungen 54, die in den Schmalseitenwänden des Gehäuses 12 ausgebildet sind. Diese Öffnungen 54 können kreisrund sein und dienen zur Aufnahme eines Zapfens, der an nicht dargestellten Wandbefestigungselementen ausgebildet ist. Die Wandbefestigungselemente können selbstverständlich auch in Form von Winkellaschen einstückig mit dem Gehäuse 12 ausgebildet sein. Das Gehäuse 12 läßt sich somit sehr einfach an einer Badezimmerwand an beliebiger Stelle mittels zwei Schrauben befestigen, und zwar derart, daß der Gehäuseboden 16 an der Gebäudewand anliegt und die drei Anschlußstutzen 22 nach unten zeigen.

## Patentansprüche

1. Schaltventil zum Anschluß an eine Badewannen-Mischarmatur, mit einem Zulaufanschluß (22) und zwei wahlweise aktivierbaren Auslaufanschlüssen (22), bestehend aus einem, in einem Gehäuse (12) verstellbar angeordneten Ventilkörper (30) sowie einem Betätigungsorgan (4) zum Verstellen des Ventilkörpers (30), dadurch gekennzeichnet, daß der Ventilkörper (30) in einer länglichen zylindrischen Kammer (26) längsverschiebbar gelagert ist und die drei Anschlüsse (22) rechtwinklig zur Kammerlängsachse in Längsabständen in die Kammer (26) münden, wobei der mittlere Anschluß (22) der Zulaufanschluß ist, daß der Ventilkörper (30) in seiner Mittelstellung mindestens einseitig aus der Kammer (26) stirnseitig herausragt, daß das Betätigungsorgan aus einer, teilweise aus einer Gehäuseöffnung (42) herausragenden Wippe (44) besteht, die in ihrer Längsmitte im Gehäuse (12) schwenkbar gelagert ist und wenigstens an einem Ende einen Betätigungsfortsatz (50) aufweist, der das eine Ende des Ventilkörpers (30) mit einer Betätigungsfläche (52) kontaktiert, wobei die Betätigungsfläche (52) so gestaltet ist, daß beim Niederdrücken des dem Betätigungsfortsatz (50) benachbarten Endes der Wippe (44) aus einer Neutralstellung in eine Schaltstellung der Ventilkörper (30) axial verschoben wird und den Zulaufanschluß (22) mit einem der beiden Auslaufanschlüsse (22) kommunizierend verbindet, und daß eine Rückstellvorrichtung (50) vorgesehen ist, die beim Zurückschwenken der Wippe (44) den Ventilkörper (30) in die Neutralstellung bzw. über diese hinaus zurückschiebt.

2. Schaltventil nach Anspruch 1, dadurch gekennzeichnet, daß die Rückstellvorrichtung eine auf den Ventilkörper (30) axial wirkende Feder umfaßt.

3. Schaltventil nach Anspruch 1, dadurch gekennzeichnet, daß die Rückstellvorrichtung aus einem zweiten Betätigungsfortsatz (50) besteht, der - bezogen auf die mittlere Symmetriequerebene des Gehäuses (12) - spiegelbildlich zum ersten Betätigungsfortsatz (50) ausgebildet und am anderen Längsende der Wippe (44) angeordnet ist und mit dem anderen Ende des Ventilkörpers (30) zusammenwirkt.

4. Schaltventil nach Anspruch 3, dadurch gekennzeichnet, daß die in der Längsachse des Ventilkörpers (30) gemessenen Abstände zwischen den einander zugewandten Betätigungsflächen (52) beider Betätigungsfortsätze (50) über wenigstens den größten Teil des Verstellbereiches der Wippe (44) im wesentlichen gleich sind.

5. Schaltventil nach einem der Ansprüche 1 bis 4, dadurch gekennzeichnet, daß das Gehäuse (12) einen flachen Boden (16) zur Wandbefestigung aufweist und daß die Gehäuseöffnung (42) für die Wippe (44) sich in der von der Bodenfläche (14) abgewandten Deckfläche (40) befindet.

6. Schaltventil nach einem der Ansprüche 1 bis 5, dadurch gekennzeichnet, daß die Gehäuseöffnung (42) im wesentlichen rechteckförmig konturiert ist und ein Längen-Breiten-Verhältnis von mindestens etwa 2:1 aufweist.

7. Schaltventil nach einem der Ansprüche 1 bis 6, dadurch gekennzeichnet, daß alle Anschlüsse (22) an einer Längsseitenwand (20) des Gehäuses (12) in einer Reihe und in gleichen Längsabständen vorgesehen sind.

8. Schaltventil nach einem der Ansprüche 1 bis 7, dadurch gekennzeichnet, daß in beiden Schmalseitenwänden des Gehäuses (12) jeweils eine Ausnehmung (54) vorgesehen ist, mit der ein Kupplungsansatz eines Wandbefestigungselementes kuppelbar ist oder daß an beiden Schmalseitenwänden je ein nach außen stehender Befestigungsansatz vorgesehen ist.

9. Schaltventil nach einem der Ansprüche 1 bis 8, dadurch gekennzeichnet, daß die Achsen der drei Anschlüsse (22) und die Schwenkachse (46) der Wippe (44) parallel liegen.

10. Schaltventil nach einem der Ansprüche 1 bis 9, dadurch gekennzeichnet, daß das Gehäuse (12) und die Wippe (44) als Kunststoff- Spritzgußteile ausgebildet sind, daß die Anschlüsse (22) als Gewindestutzen einstückig mit dem Gehäuse (12) ausgebildet sind und daß die Zylinderkammer in einer Buchse (26) ausgebildet ist, die im Gehäuse (12) fest verankert ist.

## Claims

1. A change-over valve for attachment to a bath-tub mixing fitting and having a supply connection (22) and two alternatively activatable discharge connections (22) and comprising a valve member (30) arranged so as to be displaceable in a housing (12), and a control member (4) for adjusting the valve member (30), **characterised in that** the valve member (30) is mounted so as to be longitudinally displaceable in an elongate cylindrical chamber (26), and the three connections (22) open into the chamber (26) at right angles to the longitudinal axis thereof, wherein the central connection (22) is the supply connection, that at least one end of the valve member (30) in the neutral position thereof projects from the chamber (26) on at least one side, that the control member comprises a rocker (44) projecting partially from a housing opening (42) and being pivotably mounted in its longitudinal centre in the housing (12) and having an actuating extension (50) at least at one end thereof contacting one end of the valve member (30) with an actuating surface (52), wherein the actuating surface (52) is designed in such a manner that when the end of the rocker (44) adjacent the actuating extension (50) is depressed from a neutral position into a connecting position, the valve member (30) is axially displaced and connects the supply connection (22) to one of the two discharge connections (22) so that they communicate, and a resetting device (50) is provided returning the valve member (30) into the neutral position or beyond when the rocker (44) is pivoted back.

2. A change-over valve according to Claim 1, **characterised in that** the resetting device comprises a spring acting axially on the valve member (30).

3. A change-over valve according to Claim 1, **characterised in that** the resetting device comprises a second actuating extension (50), the mirror image of the first actuating extension (50) relative to the central transverse plane of symmetry of the housing (12), and is arranged at the other longitudinal end of the rocker (44) and co-operates with the other end of the valve member (30).

4. A change-over valve according to Claim 3, **characterised in that** the distances, measured along the longitudinal axis of the valve member (30), between the actuating surfaces (52) of the two actuating extensions (50) facing each other are substantially identical over at least the largest part of the adjustment region of the rocker (44).

5. A change-over valve according to any one of Claims 1 to 4, **characterised in that** the housing (12) has a flat base (16) for attachment to the wall, and the housing opening (42) for the rocker (44) is in the cover surface facing away from the base surface (14).

6. A change-over valve according to any one of the Claims 1 to 5, c**haracterised in that** the outline of the housing opening (42) is essentially rectangular and has a ratio of length to width of at least approximately 2:1.

7. A change-over valve according to any one of the Claims 1 to 6, **characterised in that** all connections (22) are provided in a row on a longitudinal side wall (20) of the housing (12) and are equally spaced longitudinally.

8. A change-over valve according to any one of the Claims 1 to 7, **characterised in that** a respective recess (54) is provided in both narrow side walls of the housing (12) and can be used to engage a coupling attachment of a wall attachment member, or an attachment member projecting outwards is provided on each of the two narrow side walls.

9. A change-over valve according to any one of Claims 1 to 8, **characterised in that** the axis of the three connections (22) and the axis of rotation (46) of the rocker (44) are parallel.

10. A change-over valve according to any one of Claims 1 to 9, **characterised in that** the housing (12) and the rocker (44) are in the form of injection-moulded parts, the connections (22) are formed as threaded connection pieces integrally with the housing (12) and the cylinder chamber is in a bushing (26) securely mounted in the housing (12).

## Revendications

1. Soupape de commutation destinée à être raccordée à un robinet mélangeur de baignoire, avec un raccord d'alimentation (22) et deux raccords d'évacuation (22) actionnables alternativement, composée d'un corps de soupape (30) déplaçable dans un boîtier (12) ainsi que d'un organe d'actionnement (4) destiné à déplacer le corps de soupape (30), caractérisée en ce que le corps de soupape (30) est monté de manière déplaçable longitudinalement dans une chambre cylindrique allongée (26) et que les trois raccords (22) débouchent à des distances longitudinales dans la chambre (26), à angle droit par rapport à l'axe longitudinal de la chambre, le raccord (22) central étant le raccord d'alimentation, que le corps de soupape (30) ressort, dans sa position centrale, du côté frontal au moins d'un côté de la chambre (26), que l'organe d'actionnement consiste en un archet, ressortant partiellement d'une ouverture de boîtier (42), qui est monté de manière pivotable en son centre longitudinal dans le boîtier (12) et présente, au moins à l'une de ses extrémités, un prolongement d'actionnement (50) qui vient en contact, par une surface d'actionnement (52), avec l'une des extrémités du corps de soupape (30), la surface d'actionnement (52) se présentant de telle manière que, lors de l'abaissement de l'extrémité de l'archet (44) adjacente au prolongement d'actionnement (50) d'une position neutre à une position de commutation, le corps de soupape (30) est déplacé axialement et relie en communication le raccord d'alimentation (22) avec l'un des deux raccords d'évacuation (22), et qu'il est prévu un dispositif de rappel (50) qui, lors du retour de pivotement de l'archet (44), ramène le corps de soupape (30) dans la position neutre, respectivement au-delà de cette dernière.

2. Soupape de commutation suivant la revendication 1, caractérisée en ce que le dispositif de rappel comporte un ressort agissant axialement sur le corps de soupape (30).

3. Soupape de commutation suivant la revendication 1, caractérisée en ce que le dispositif de rappel consiste en un second prolongement d'actionnement (50) qui, par rapport au plan transversal de symétrie moyen du boîtier (12), se présente en image-miroir par rapport au premier prolongement d'actionnement (50) et est disposé à l'autre extrémité longitudinale de l'archet (44) et coopère avec l'autre extrémité du corps de soupape (30).

4. Soupape de commutation suivant la revendication 3, caractérisée en ce que les distances entre les surfaces d'actionnement (52) orientées l'une vers l'autre des deux prolongements d'actionnement (50), mesurées sur l'axe longitudinal du corps de soupape (30), sont sensiblement égales sur au moins la majeure partie de la plae de déplacement de l'archet (44).

5. Soupape de commutation suivant l'une des revendications 1 à 4, caractérisée en ce que le boîtier (12) présente un fond plat (16) destiné à la fixation de la paroi et que l'ouverture de boîtier (42) pour l'archet (44) se situe dans la surface supérieure (40) opposée à la surface inférieure (14).

6. Soupape de commutation suivant l'une des revendications 1 à 5, caractérisée en ce que l'ouverture de boîtier (42) est à contour sensiblement rectangulaire et présente un rapport longueur-largeur d'au moins environ 2:1.

7. Soupape de commutation suivant l'une des revendications 1 à 6, caractérisée en ce que tous les raccords (22) sont prévus dans une paroi latérale longitudinale (20) du boîtier (12), sur une rangée et à égales distances longitudinales.

8. Soupape de commutation suivant l'une des revendications 1 à 7, caractérisée en ce que dans chacune des parois latérales étroites du boîtier (12) est prévu un évidement (54) avec lequel peut être couplé un épaulement de couplage d'un élément de fixation de paroi ou que sur chacune des deux parois latérales étroites est prévu un épaulement de fixation en saillie vers l'extérieur.

9. Soupape de commutation suivant l'une des revendications 1 à 8, caractérisée en ce que les axes des trois raccords (22) et l'axe de pivotement (46) de l'archet (44) sont parallèles.

10. Soupape de commutation suivant l'une des revendications 1 à 9, caractérisée en ce que le boîtier (12) et l'archet (44) sont réalisés sous forme de pièces en matière plastique moulées par injection, que les raccords (22) sont réalisés sous forme de tubulures à filet, d'une seule pièce avec le boîtier (12), et que la chambre cylindrique est réalisée dans un manchon (26) fermement ancré dans le boîtier (12).
